# EUROPEAN PATENT SPECIFICATION

(11) **EP 0 415 082 B1**
(45) Date of publication and mention of the grant of the patent: **28.12.1994**
(21) Application number: 90114342.0
(22) Date of filing: 26.07.1990
(51) Int. Cl.: H01R 4/70, H02G 15/18

(54) **Storable coating element for electrical cable joints for cables with different diameters**
Lagerfähiges Ummantelungselement für elektrische Kabelverbindungen für Kabel mit verschiedenen Durchmessern
Elément de recouvrement emmagasiné pour jonctions de câbles avec diamètres différents

(30) Priority: 01.08.1989 IT 2140489
(43) Date of publication of application: 06.03.1991
(73) Proprietor: PIRELLI CAVI S.p.A., 20126 Milano (IT)
(72) Inventor: Vallauri, Ubaldo, Monza (MI) (IT); Portas, Francesco, Quattordio (AL) (IT)
(74) Representative: Giannesi, Pier Giovanni

(56) References cited:
- DE-A- 3 012 971
- DE-A- 3 604 884
- GB-A- 1 277 217
- GB-A- 1 403 175
- GB-A- 2 156 606

## Description

The present invention relates to a coating sleeve for cable joints made of compounds of cross-linked polymeric material, to be applied to several different cables having different outer diameters.

In order to perform the junction of electrical cable lengths to carry energy, particularly in the field of medium and high voltages the cables are uncoated at the ends, that is devoid of the respective insulating coatings and, if it is the case, semiconductive coatings, for the purpose of exposing the conductors thereby allowing their mutual connection, and subsequently the area without the insulating coating is filled with appropriate materials and then covered with an outer coating so as to restore the required insulating characteristics in the junction area.

For this purpose a tubular coating element, hereinafter referred to as sleeve, is fitted over the junction area. The sleeve is made of cross-linked polymeric material consisting of several layers each having specific electrical features and as a whole it is designed to be elastically clamped around the surface of the insulating layer of the connected cables.

The sleeve is therefore radially expanded and maintained under expanded conditions until the moment of use; after the sleeve has been put over the junction area its shrinkage around the surface of the cable insulating layer is carried out, by exerting a pressure thereon capable of ensuring the necessary electric requirements.

In order to keep the sleeve under expanded conditions it can be made of thermoshrinkable material, a material which is capable of maintaining the expansion it has received as far as its shrinkage by heat is caused; however this technique requires delicate operations for the installation of the sleeve because heating means such as free flames are needed to carry out the thermoshrinkage of the sleeve.

Alternatively, the sleeve may be made of an elastic material and fitted around a tubular support body which is removed by known techniques after the sleeve has been brought to the intended position, which enables the sleeve to elastically shrink and be clamped around the cable insulating layer.

For the purpose elastic multilayered sleeves have been made, each layer of small thickness being elastically expanded and independently supported on respective tubular bodies, to be applied one after the other until the intended thickness has been reached: in this way each layer is submitted to the minimum permissible expansion but several contact areas are created between the different separate layers, which increases the risk that polluting substances or air bubbles may be incorporated and consequently phenomena of partial discharges may be set in motion, all that bringing in a short time to the joint failure.

Also sleeves of great thickness have been made as disclosed for example in EP-A- 0 379 056 (intermediate document) of the same applicant, in which in particular provision is made for a sleeve of a single size for coating cable junctions having different sizes by the use of sleeves disposed in the elastically expanded state on the respective supports at the factory and kept as such until the moment of their installation.

In the above application the problem of imparting the sleeve an expansion sufficient to enable it to be fitted over the cable having the biggest diameter in the group of the intended sizes while at the same time enabling the sleeve to be efficiently clamped also around the cables of the smallest size in the group has been solved by the use, for the outermost layer of the sleeve, of a material having a reduced residual deformation when the applied expansion stress has ceased, and therefore adapted to allow the whole sleeve to be clamped around the small-sized cables in an efficient manner.

In fact, the polymeric materials to be used for the manufacture of sleeves in which each layer needs particular electrical features well known in the field, generally have an elastic return to the original size which is incomplete, that is exhibiting an instantaneous residual deformation the degree of which depends, among other things, on the value of the previously imposed deformation, the temperature and time of stay at the strained state; said instantaneous residual deformation decreases as time goes by and tends to become zero after a certain lapse of time, in the range of some days or months at room temperature (≦ 30°C).

Due to the fact that after the coating sleeve has been fitted on the cable junction it is impossible to wait, before putting the cable itself into service, for a time sufficient to achieve said size recovery which is necessary to the correct clamping of the sleeve around the cable, for the manufacture of sleeves expanded on the respective support at the factory, in the above mentioned patent application, the use of materials having particular properties of reduced residual deformation and capable of causing the shrinkage of the whole sleeve has been proposed for the outermost layer of the sleeve.

The materials of the above type however are of difficult formulation because the mechanical characteristics required of them can be hardly associated with the necessary electrical properties and therefore in accordance with said patent application it is the sole outer layer that must be sized so as to cause the elastic shrinkage of the whole sleeve; therefore there is a demand for a sleeve adapted to be used for the purpose, which exhibits identical elastic characteristics in the different layers, without requiring the use of materials having the above stated high elastic properties.

DE-A-30 12 971 discloses a radially shrinkable sleeve, comprising a heat recoverable layer, suitable to maintain the sleeve in a storage-stable configuration, but which can be caused to shrink towards the original configuration.

DE-A-36 04 884 discloses a sleeve comprising two layers, one of which is made of foamed plastic material; the sleeve is thermoretractable.

GB-A-2 156 506 discloses a cable joint in which the insulation is replaced by unjection moulding and crosslinking.

GB-A-1 277 217 shows a cable joint in which the same sleeve can fit many different cable diameters by the use of insulating spacers.

GB-A-1 403 175 discloses an elastic cover comprising gripping means on the perimetral surface for its expansion; an adhesive is introduced to ensure the contact of the cover and the cables when the cover is contracted.

Accordingly the present invention aims at manufacturing a coating sleeve for electrical cable joints which can be prepared already expanded on the respective tubular support and stored until the time of use, and which can be used with cables of several sizes while ensuring an appropriate clamping of the cables, although materials allowing a certain degree of instantaneous residual deformation are used for its manufacture.

It is an object of the present invention a storable coating element for electrical cable joints, to be applied to cables including a cable electrically insulating layer, comprising:
i. a tubular support element;
ii. an elastic sleeve made of cross-linked polymeric compounds, including an electrically insulating layer as a part thereof, said sleeve being fitted on said tubular support element in an elastic expanded condition, so that the sleeve, after positioning around a cable and removal of said tubular support element, fits on said cable;

characterised in that:
iii. the modulus of elasticity of the sleeve is in the range of 5 to 0.5 MPa;
iv. the electrically insulating layer of the sleeve has an instantaneous residual deformation equal to or greater than 23% upon release at room temperature after an elastic expansion up to a prefixed maximum diameter with an imposed expansion value equal or greater than 170%, maintained for a storage time equivalent to at least 24 months at room temperature;
v. the sleeve has an interference of at least 10% with a prefixed minimum diameter upon release from the support element after said elastic espansion of the electrically insulating layer; and
vi. the thickness of the sleeve is greater than 8 mm, the thickness of the electrically insulating layer (10b) being of at least 6 mm, such as to cause a pressure greater than 0.1 MPa on the cable electrically insulating layer of a cable having said prefixed minimum diameter upon release after said elastic expansion.

It is another object of the present invention a method for coating, with a storable coating element of the type of claim 1, electrical cable joints, for cables having an electrically insulating layer, in a prefixed outer cable diameter range, ranging from a smallest outer cable diameter to a largest outer cable diameter, characterized in that it comprises the steps of:
- selecting a maximum expansion diameter, greater than said largest outer cable diameter;
- selecting an electrically insulating layer of a sleeve of cross-linked polymeric compounds having an istantaneous residual deformation equal to or greater than 23% with an imposed expansion value equal to or greater than 170%;
- determining a minimum interference value between said sleeve having a thickness greater than 8 mm comprising said electrically insulating layer, which has a thickness of at least 6 mm, and the electrically insulating layer of a cable having said smallest outer cable diameter, causing a contact pressure equal to or greater than 0.1 MPa;
- determining the correlation between the imposed expansion and the residual deformation of said material, corresponding to said minimum interference value;
- determining a minimum expansion value of said imposed expansion which, according to said correlation, corresponds to an instantaneous residual deformation of the sleeve providing said minimum interference value, when released after having been maintained at said minimum expansion value for a storage time equivalent to at least 24 months at room temperature;
- verifying that said minimum value be lower than a permissible expansion value of said cross-linked polymeric material, and that the sleeve is safe from tears when said permissible expansion value is maintained for at least 6 months at room temperature;
- selecting an inner bore at rest of the sleeve corresponding to a radial expansion value of said electrically insulating layer, from said inner bore at rest up to said maximum diameter, greater than said minimum expansion value and lower than said permissible expansion value;
- providing a tubular support having an outer diameter equal to said maximum diameter and elastically expanding the sleeve thereon;
- inserting said tubular support carrying said sleeve expanded thereon around a cable in said cable diameter range and successively removing said tubular support from said sleeve, thereby causing the sleeve to shrink elastically on said cable.

More details will become apparent from the following description of one embodiment of the invention given hereinafter with reference to the accompanying drawings, in which:
- Fig. 1 shows a diagrammatic axial section of the junction area between two cables, where the coating sleeve is about to be applied to the cables;
- Fig. 2 is a cross sectional view of a sleeve according to the invention, in a rest condition;
- Fig. 3 is a cross sectional view of the sleeve shown in Fig. 2, mounted on a tubular support in an expanded condition;
- Fig. 4 is a cross sectional view of the sleeve shown in Fig. 2, mounted on the cable having the smallest diameter in the intended group;
- Fig. 5 is a diagram showing the correlation between imposed elongation, under predetermined conditions, and instantaneous residual deformation.

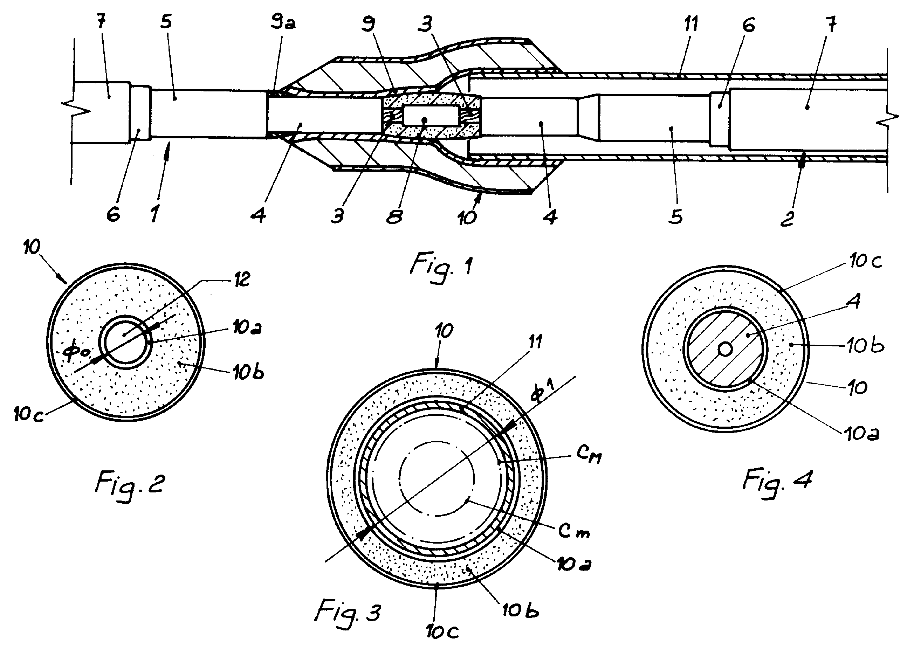

As diagrammatically shown in Fig. 1, the junction between two cables 1, 2 has been carried out by disposing the ends of the cables to be joined in faced relationship, from the ends of the conductors 3 the respective coating layers having been stepwise removed so that the conductors appear uncoated over a given length.

The cable coating is removed by uncoating the insulated layer 4, the semiconductive layer 5, the armouring 6 and the outer sheath 7 over a certain length thereof.

The uncoated end portions of conductors 3 are electrically connected to each other by a junction means 8.

Said electrical junction means 8. diagrammatically shown in the figure, is known per se and it may be for example welding, a scarfing element or the like and therefore will not be herein described in greater detail.

The space corresponding to the area where the insulating layer has been removed, after the conductors have been electrically connected to each other is filled with a sealing compound 9 having a high dielectric constant, which is well known in the field as well; the sealing compound 9 is also disposed close to the transition areas 9a between the outer semiconductive layer and the cable insulating layer in order to eliminate the step formed therein.

A sleeve 10 made of cross-linked polymeric material is arranged on the junction area to cover it. The sleeve 10 is slidably fitted on one of the cables, before carrying out their junction and after the electrical connection operations have been completed by the use of the junction means 8 and by applying the filler 9, the sleeve itself is brought over the junction area where it is released so as to form a cover coating the uncovered lengths of the insulating layer 4.

For this purpose the sleeve 10 is mounted around a tubular support body 11 which keeps it in a radially expanded condition, its inner diameter being sufficient to allow the sleeve itself and the tubular body carrying it to freely slide on the cables.

In order to enable the sleeve to be put around the junction, the tubular body 11, as diagrammatically shown in Fig. 1, is progressively removed using known techniques, for example by axial withdrawal, so that the sleeve can elastically shrink around the surfaces of the cable insulating layer ejecting the air from the areas in contact therewith and adhering to said surfaces while exerting a certain pressure thereon in order to ensure a correct distribution of the electric field in the junction area.

For this purpose, for medium voltage cables (Uₘ ≧ 12 KV) for example, this pressure must be higher than a minimum value of about 0.1 MPa.

In this case the sleeve is required to have an inner diameter at rest, that is in the absence of applied stresses, lower than the outer diameter of the cables by an amount giving rise to an elastic deformation of the sleeve corresponding to the desired clamping of said sleeve on the cables, which means in other words that the hole in the sleeve must have an interference with the diameter of the cable insulating coating, so as to remain around it in elastically deformed conditions.

The required degree of interference for developing a certain pressure firstly depends on the deformability of the material of which the sleeve is made, that is on its modulus of elasticity E; this modulus of elasticity for the materials commonly adapted for use in this application is in the range of 5 to 0.5 MPa; secondly, it depends on the radial thickness of the sleeve.

Taking into account the materials commonly used and the sizes suitable for the intended applications, a sufficient clamping of the sleeve on the cable can be achieved by an interference value between the sleeve hole and the outer diameter of the cable greater than or equal to 10%, when the modulus of elasticity is at least 0.5 MPa and the wall thickness is at least 8 mm.

A sleeve adapted to the end is shown in Fig. 2 in a rest condition, that is in a non-expanded condition; it has a central hole 12. an inner layer 10a, that is the voltage divider, made of a material having a high dielectric constant ε, an intermediate layer 10b made of insulating material and an outer layer 10c made of a semiconductive material.

The materials used for the manufacture of the sleeves are cross-linked polymeric materials consisting of compounds having the required electric characteristics, which in addition must have elastic properties ensuring their clamping around the cables as shown.

Based on the sizes which depend on the electrical requirements, layers 10a and 10c have a remarkably smaller thickness than the insulating layer 10b which, under these conditions, is therefore substantially responsible for the correct clamping of the whole sleeve, the help given by the two other layers being negligible.

The sleeve in accordance with the invention can be used for junctions in cables of several sizes, thereby reducing the necessity of storing several series of sleeves adapted to different cable diameters.

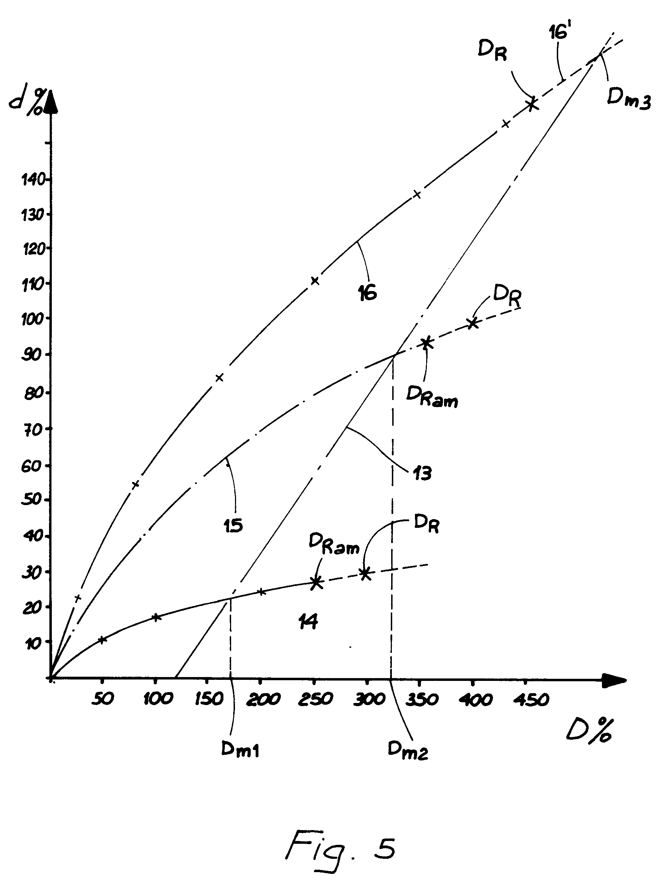

For this purpose the sleeve is expanded on the tubular support 11, as shown in Fig. 3, to an inner diameter φ₁ which is big enough to be fitted on the cables having the biggest diameter, the overall dimension of which is shown in the figure in dotted line and by reference C_{M}; likewise the sleeve must be adapted to be also clamped with sufficient interference as previously stated, around the cables having the smallest diameter in the group of different sizes for which said sleeve is intended, as shown in Fig. 4, and therefore around a cable having an overall dimension identified by Cₘ.

In particular, in order to make a sleeve suit a group of cables in which the diameter of the biggest cable is 60% greater than the diameter of the smallest cable, as in the case of cables of a 20 mm diameter and 32 mm diameter for example, the required expansion of the sleeve must reach an inner diameter of about 40 mm, taking into account the sizes of a tubular support body 11 necessary for mounting and which must be adapted to be fitted on the greatest one of the intended cables, while at the same time a shrinkage of the sleeve at the release is required as far as it reaches a diameter of 18 mm in order to enable it to fit around the smallest cables with a minimum elastic interference of 10%.

The sleeves can be stored under undeformed conditions and expanded on the respective tubular support bodies on the stocks, immediately before their use, but preferably the sleeves should be mounted on the tubular bodies at the factory under controlled conditions and stored in an expanded state until the moment of use, generally for a period of some months.

The materials used for manufacturing the sleeves however still have a certain degree of instantaneous residual deformation; in other words, if they are expanded starting from a given value of inner diameter and kept in this state for some time, when released they elastically return to a bigger diameter than the starting one, and therefore they maintain a certain deformation which is not immediately recovered and which is partly or completely reduced only after a long period, that is weeks or months, at room temperature lower than 30°C, particularly when the deformed condition has been maintained for a long time as in the case of sleeves expanded at the factory and stored for some months in the expanded condition until the moment of use.

Therefore in order to achieve a sufficient clamping value of the sleeve on the cables starting from the moment the sleeve is fitted thereon, at room temperature, without being obliged to wait for the deformation recovery time before putting the cable into service, which time would be inacceptable when common applications are concerned, it is necessary to consider this instantaneous residual deformation as well so that when the sleeve is released on the cables it may immediately exhibit the necessary degree of interference required for its clamping.

The instantaneous residual deformation of the material depends on the value of the imposed deformation, the test modalities, and the holding time and temperature to the deformed state; shown in Fig. 5 is a diagram illustrating, by way of example, the development of the correlation between the percent deformation D imposed to the material, maintained for 40 days at 65°C and the respective instantaneous residual deformation d, for some materials adapted to be used in making the insulating layer 10b.

The stated time and temperature conditions substantially correspond to a two year stay at room temperature and therefore simulate, in an accelerated manner, the real conditions at the moment of use of a sleeve expanded at the factory, after a period of storage, thereby constituting an appropriate reference value for evaluating the elastic behaviour of the material.

Line 13 represents the requested correlation between the imposed deformation D and residual deformation d so that a material following an imposed expansion from an initial diameter until the desired maximum diameter of 40 mm, may elastically come back to the diameter of 18 mm corresponding to a 10% interference with a cable having a diameter of 20 mm.

The foregoing means that an elastomeric material which can be brought to expansion conditions comprised within the field located to the right of line 13 can be used to make the insulating layer in the sleeve.

In fact, using a material for example of the type showing a correlation corresponding to curve 14 between imposed expansion D and residual deformation d, it is possible to find an imposed expansion value Dₘ₁ approximately of 170% at which an instantaneous residual deformation of about 23% is obtained; therefore starting from a diameter φ₀ at rest of 14.5 mm a diameter of 18 mm at the release can be reached as desired, which ensures the requested interference of 10% with a cable having the smallest diameter in the intended range.

Even if a material with lower elastic characteristics is used, that is a material allowing a greater instantaneous residual deformation, as shown by curve 15 in Fig, 5, it is possible to find an imposed expansion value Dₘ₂ of 320% at which a residual deformation of 90% is obtained, so that a diameter φ₀ at rest of 9.5 mm can be selected, which diameter allows a diameter value of 18 mm at the release to be reached even taking into account a residual deformation of 90%.

Higher values of the imposed expansion, that is lower values of φ₀ in the sleeve are applicable as well, provided that the diameter under expansion conditions is the same and that for the various compounds points along the curves 14, 15 located to the right of the intersection with line 13 are selected. These values will bring to correspondingly higher interference values of the sleeve with the cable at the release.

The above stated elastic characteristics must be associated with an ultimate deformation value of the selected compound capable of ensuring that the imposed expansion leading to the desired clamping can be reached without previously coming to the tearing of the sleeve and at all events to a critical stress value.

In addition the above condition is not referred to the instantaneous ultimate expansion value of the compound forming the insulating layer in the sleeve, because when the sleeve has been left at the expanded state for an important period of time, on the order of some months, critical conditions can be reached also in the presence of expansion values lower than the above "instantaneous" ultimate expansion. Such ultimate expansion values, where the expansion is kept in the course of time, are shown in Fig. 5 by points D_{R}.

For the selected compound it is therefore necessary to set the ultimate expansion value taking into account the fact that the expansion must be maintained for a predetermined period of time, six months for example, as well as a permissible safety value D_{Ram} related thereto, and be sure that the desired expansion value for the sleeve is included within the minimum expansion Dₘ and the maximum permitted expansion D_{Ram}.

As shown in Fig. 5, a compound behaving in accordance with the curve 16 and exhibiting a high residual deformation could be used as well by selecting a starting diameter involving an expansion at least equal to Dₘ₃ so as to go to the right of line 13, but if the permissible ultimate expansion value D_{R}, as above stated, is lower than value Dₘ₃, it is impossible to find an application field for the sleeve.

The preferred expansion range on the sleeve support according to the invention provides imposed expansions in the range of 120% to 320% and preferably between 150% and 250%.

As the sleeve is a solid tubular body of great thickness, the percent expansion is not constant over the whole sleeve but decreases from the axis towards the periphery, the most critical conditions for the material used, that is to say the greatest percent expansions, occurring in the areas which are the closest to the central hole, the conditions becoming less severe when moving towards the outside.

Therefore the voltage dividing layer 10a which is the most stressed by the imposed radial expansion, is required to be made of a material having, at the intended storage conditions and for the intended storage time at the expanded state, mechanical properties adapted to make it withstand the imposed expansion values; on the other hand this material, due to the reduced thickness of the layer usually lower by 10% than the overall sleeve thickness, does not greatly affect the clamping of the sleeve as a whole.

Under operating conditions, once the sleeves have been mounted on the cables, they are liable to work in a state of less severe expansion; on the other hand, due to the fact that the cable in its operating conditions must work at much higher temperatures than the room temperature, usually fixed at 90°C, and sometimes temperatures are still higher for a reduced period of time, it is clear that also the sleeves applied to the cable junctions must be able to withstand such temperatures while working under safety conditions.

This fact does not create any difficulty when the sleeves are applied to cables of the smallest size, because when they are mounted on the cables their innermost layers are submitted to a reduced expansion, as above stated; on the contrary when the sleeves are mounted to cables of the biggest size they are in a state of high radial expansion because their shrinkage takes place on a diameter greater by 60% than the minimum one.

For instance, a sleeve having an inner diameter at rest of 9.5 mm and applied to cables of a 32 mm diameter is expanded by 236%. In order to allow the sleeve to withstand also such a condition with an appropriate safety margin the insulating layer 10b of the sleeve as well as the innermost layer 10a must have an ultimate elongation value, that is a permissible elongation with respect to fracture, at least higher than 300%, at the operating temperature of the cable.

By way of example, a compound of a cross-linked polymeric material having the stated features and adapted to be used for making the insulating layer 10b, has the following composition (expressed in parts by weight):
- ethylene-propylene copolymer, for example the one known on the market under the name DUTRAL C0-054, produced by DUTRAL S.p.A. 100
- polyisobutylene, for example the one known on the market under the name OPPANOL B 200 produced by BASF 22
- calcined kaolin 80
- trimethoxyethoxy vinylsilane 1.5
- paraffin wax 2,5
- zinc oxide 5
- lead tetroxide (Pb₃O₄) 7
- liquid cis-1,2-polybutadiene 6
- poly-1,2-dihydro-2,2,4-trimethyl quinoline 1.5
- sulfur 0.47
- 1,1-bis-tert-butylperoxy-3,3,5-trimethyl cyclohexane 4.2

The physical characteristics of the sleeve layer made with said compound, after cross-linking, are as follows:
- tensile breaking strength 7 MPa
- maximum permissible expansion at room temperature, held for a period of six months > 400%
- maximum permissible expansion at 100°C, held for a period of six months > 300%
- modulus of elasticity E 1.8 MPa
- instantaneous residual deformation at an imposed radial expansion of 320%, held for 40 days at 65°C, determined according to UNI specifications 7321-74 90%
- dielectric constant ε determined according to ASTM specifications D150 3
- volume resistivity determined according to ASTM specifications D257 10¹⁵ Ohm x cm

An example of a compound of a cross-linked polymeric material having the stated features as regards deformability and strength and adapted to be used for making the inner layer 10a, has the following composition (expressed in parts by weight):
- ethylene-propylene copolymer, for example the one known on the market under the name DUTRAL C0-054 produced by DUTRAL S.p.A. 100
- zinc oxide 5
- carbon black, for example the one known on the market under the name HUBER N 990 produced by DEGUSSA S.p.A. 140
- paraffin plasticizer 40
- poly-1,2-dihydro-2,2,4-trimethyl quinoline 1.5
- stearic acid 1
- triallyl cyanidate 1
- cumene hydroperoxide 2

The physical characteristics of the sleeve layer made with said compound, after cross-linking, are as follows:
- tensile breaking strength 7 MPa
- maximum permissible expansion at room temperature, held for a period of six months > 400%
- maximum permissible expansion at 100°C, held for a period of six months > 300%
- modulus of elasticity E 1.5 MPa
- instantaneous residual deformation at an imposed radial expansion of 300%, held for 40 days at 65°C, determined according to UNI specifications 7321-74 90%
- dielectric constant _ determined according to ASTM specifications D150 15
- volume resistivity determined according to ASTM specifications D257 10¹⁰ Ohm x cm

If, for reasons different from the mechanical ones taken into account, different relative thicknesses between the various layers forming the sleeve are required, the conditions of limited residual deformation as above dictated could be applied not only to the insulating layer but also to one or more of the other layers, based on their real state of stress and on their contribution to the elastic behaviour of the assembly.

## Claims

1. A storable coating element for electrical cable joints, to be applied to cables (1,2) including a cable electrically insulating layer (4), comprising:
i. a tubular support element (11);
ii. an elastic sleeve (10) made of cross-linked polymeric compounds, including an electric insulating layer (10b) as a part thereof, said sleeve (10) being fitted on said tubular support element (11) in an elastic expanded condition, so that the sleeve (10), after positioning around a cable (1,2) and removal of said tubular support element (11), fits on said cable (1,2);
characterised in that:
iii. the modulus of elasticity of the sleeve (10) is in the range of 5 to 0.5 MPa;
iv. the electrically insulating layer (10b) of the sleeve (10) has an instantaneous residual deformation equal to or greater than 23% upon release at room temperature after an elastic expansion up to a prefixed maximum diameter with an imposed expansion value equal or greater than 170%, maintained for a storage time equivalent to at least 24 months at room temperature;
v. the sleeve (10) has an interference of at least 10% with a prefixed minimum diameter upon release from the support element (11) after said elastic expansion of the electrically insulating layer (10b); and
vi. the thickness of the sleeve (10) is greater than 8 mm, being the thickness of the electrically insulating layer (10b) of at least 6 mm, such as to cause a pressure greater than 0.1 MPa on the cable electrically insulating layer (4) of a cable (1,2) having said prefixed minimum diameter upon release after said elastic expansion.

2. A storable coating element for cable joints according to claim 1, characterised in that the sleeve (10) is in an expansion state ranging from 170% to 320% and has a corresponding instantaneous residual deformation comprised between 23% and 90%.

3. A storable coating element for cable joints according to claim 2, characterised in that the electrically insulating layer (10b) is in an expansion state ranging from 170% to 250%.

4. A storable coating element for cable joints according to claim 1, characterised in that said prefixed maximum diameter is of about 40 mm and said prefixed minimum diameter is 20 mm.

5. A storable coating element for cable joints according to claim 1, characterised in that the sleeve (10) has three layers (10a, 10b, 10c) of cross-linked polymeric material compounds wherein the electrically insulating layer (10b) is the intermediate one and has a thickness equal to at least 80% of the overall thickness of the sleeve (10).

6. A storable coating element for cable joints according to claim 1, characterised in that the elastic expansion of the electrically insulating layer (10b) is lower than a permissible expansion value (D_{Ram}), lower than the ultimate expansion value (D_{R}) of the compound of cross-linked polymeric material of the electrically insulating layer (10b), and in that the sleeve (10) is safe from tears when said expansion is maintained for at least 6 months at room temperature.

7. A storable coating element for cable joints according to claim 1, characterised in that the sleeve (10) has at least a radially innermost layer (10a) which exhibits an ultimate expansion value greater than 250% at the normal operating temperature of the cable (1,2) and greater than 350% at room temperature.

8. A storable coating element for cable joints according to claim 1, characterised in that the sleeve (10) in the expanded state has a wall thickness in the range of 5 to 25 mm.

9. A method for coating, with a storable coating element according to claim 1, electrical cable joints for cables (1,2) having an electrically insulating layer (4) in a prefixed outer cable diameter range ranging from a smallest outer cable diameter (Cₘ) to a largest outer cable diameter (C_{M}), characterized in that it comprises the steps of:
- selecting a maximum expansion diameter, greater than said largest outer cable diameter (C_{M});
- selecting an electrically insulating layer (10b) of a sleeve (10) of cross-linked polymeric compounds having an istantaneous residual deformation equal to or greater than 23% with an imposed expansion value equal to or greater than 170%;
- determining a minimum interference value between said sleeve (10) having a thickness greater than 8 mm comprising said electrically insulating layer (10b), which has a thickness of at least 6 mm, and the electrically insulating layer (4) of a cable (1,2) having said smallest outer cable diameter (Cₘ), causing a contact pressure equal to or greater than 0.1 MPa;
- determining the correlation between the imposed expansion and the residual deformation of said material, corresponding to said minimum interference value;
- determining a minimum expansion value (Dm) of said imposed expansion which, according to said correlation, corresponds to an instantaneous residual deformation of the sleeve (10) providing said minimum interference value, when released after having been maintained at said minimum expansion value for a storage time equivalent to at least 24 months at room temperature;
- verifying that said minimum value (Dm) be lower than a permissible expansion value (D_{Ram}) of said cross-linked polymeric material, and that the sleeve (10) is safe from tears when said permissible expansion value is maintained for at least 6 months at room temperature;
- selecting an inner bore at rest (φₒ) of the sleeve (10) corresponding to a radial expansion value of said electrically insulating layer (10b), from said inner bore at rest (φₒ) up to said maximum diameter, greater than said minimum expansion value (Dm) and lower than said permissible expansion value (D_{Ram});
- providing a tubular support (11) having an outer diameter equal to said maximum diameter and elastically expanding the sleeve (10) thereon;
- inserting said tubular support (11) carrying said sleeve (10) expanded thereon around a cable (1,2) in said cable diameter range and successively removing said tubular support (11) from said sleeve (10), thereby causing the sleeve (10) to shrink elastically on said cable (1,2).

## Patentansprüche

1. Lagerfähiges Ummantelungselement für elektrische Kabelverbindungen zum Anbringen an Kabeln (1, 2) einschließlich einer ein Kabel elektrisch isolierenden Lage (4) mit
i. einem rohrförmigen Abstützelement (11),
ii. einer elastischen Hülse (10) aus vernetzten Polymermischungen einschließlich einer elektrisch isolierenden Schicht (10b) als Teil davon, wobei die Hülse (10) auf das rohrförmige Abstützelement (11) in einem elastischen aufgeweiteten Zustand aufgepaßt wird, so daß die Hülse (10) nach ihrer Positionierung um ein Kabel (1, 2) und nach Entfernen des rohrförmigen Abstützelements (11) auf das Kabel (1, 2) aufgepaßt ist,
dadurch gekennzeichnet, daß
iii. der Elastizitätsmodul der Hülse (10) im Bereich von 5 bis 0,5 MPa liegt,
iv. die elektrisch isolierende Schicht (10b) der Hülse (10) bei Freigabe bei Raumtemperatur eine Momentanrestverformung von 23 % oder mehr nach einer elastischen Aufweitung bis zu einem vorgegebenen Maximaldurchmesser mit einem aufgebrachten Aufweitungswert von 170 % oder mehr hat, der während einer Lagerzeit aufrecht erhalten wird, die zu wenigstens 24 Monaten bei Raumtemperatur äquivalent ist,
v. die Hülse (10) nach Freigabe von dem Abstützelement (11) nach der elastischen Aufweitung der elektrisch isolierenden Schicht (10b) ein negatives Spiel von wenigstens 10 % bei einem vorgegebenen Minimaldurchmesser aufweist und
vi. die Dicke der Hülse (10) größer als 8 mm ist und die Dicke der elektrisch isolierenden Schicht (10b) wenigstens 6 mm beträgt, so daß ein Druck von mehr als 0,1 MPa auf die elektrisch isolierende Lage (4) eines Kabels (1, 2) ausgeübt wird, das den vorgegebenen Minimaldurchmesser nach Freigabe nach der elastischen Aufweitung hat.

2. Lagerfähiges Ummantelungselement für Kabelverbindungen nach Anspruch 1, dadurch gekennzeichnet, daß die Hülse (10) sich in einem Aufweitzustand befindet, der von 170 % bis 320 % reicht, und eine entsprechende Momentanrestverformung zwischen 23 % und 90 % hat.

3. Lagerfähiges Ummantelungselement für Kabelverbindungen nach Anspruch 2, dadurch gekennzeichnet, daß die elektrisch isolierende Schicht (10b) sich in einem Aufweitungszustand befindet, der von 170 % bis 250 % reicht.

4. Lagerfähiges Ummantelungselement für Kabelverbindungen nach Anspruch 1, dadurch gekennzeichnet, daß der vorgegebene Maximaldurchmesser etwa 40 mm und der vorgegebene Minimaldurchmesser etwa 20 mm beträgt.

5. Lagerfähiges Ummantelungselement für Kabelverbindungen nach Anspruch 1, dadurch gekennzeichnet, daß die Hülse (10) drei Schichten (10a, 10b, 10c) aus vernetzten Polymermaterialmischungen aufweist, wobei die elektrisch isolierende Schicht (10b) die Zwischenschicht ist und eine Dicke von wenigstens 80 % der Gesamtdicke der Hülse (10) hat.

6. Lagerfähiges Ummantelungselement für Kabelverbindungen nach Anspruch 1, dadurch gekennzeichnet, daß die elastische Aufweitung der elektrisch isolierenden Schicht (10b) kleiner ist als ein zulässiger Expansionswert (D_{Ram}), der niedriger ist als der Aufweitungsendwert (D_{R}) der Mischung des vernetzten Polymermaterials der elektrisch isolierenden Schicht (10b), und daß die Hülse (10) rißsicher ist, wenn die Aufweitung wenigstens 6 Monate bei Raumtemperatur beibehalten wird.

7. Lagerfähiges Ummantelungselement für Kabelverbindungen nach Anspruch 1, dadurch gekennzeichnet, daß die Hülse (10) wenigstens eine radial innerste Schicht (10a) hat, die einen Expansionsendwert hat, der größer als 250 % bei der normalen Betriebstemperatur des Kabels (1, 2) und größer als 350 % bei Raumtemperatur ist.

8. Lagerfähiges Ummantelungselement für Kabelverbindungen nach Anspruch 1, dadurch gekennzeichnet, daß die Hülse (10) im aufgeweiteten Zustand eine Wandstärke im Bereich von 5 bis 25 mm hat.

9. Verfahren zum Ummanteln von elektrischen Kabelverbindungen für Kabel (1, 2), die eine elektrisch isolierende Lage (4) in einem vorgegebenen äußeren Kabeldurchmesserbereich haben, der von einem kleinsten äußeren Kabeldurchmesser (Cₘ) bis zu einem größten äußeren Kabeldurchmesser (C_{M}) reicht, mit einem lagerfähigen Beschichtungselement nach Anspruch 1, dadurch gekennzeichnet daß es die Schritte aufweist:
- Wahl eines maximalen Aufweitdurchmessers, der größer als der größte äußere Kabeldurchmesser (C_{M}) ist,
- Wahl einer elektrisch isolierenden Schicht (10b) einer Hülse (10) aus vernetzten polymeren Mischungen, die eine Momentanrestverformung von 23 % oder mehr bei einem angelegten Aufweitwert von 170 % oder mehr aufweist,
- Bestimmen eines minimalen Wertes für das negative Spiel zwischen der Hülse (10), die eine Dicke von mehr als 8 mm hat und die elektrisch isolierende Schicht (10b) aufweist, welche eine Dicke von wenigstens 6 mm hat, und der elektrisch isolierenden Lage (4) eines Kabels (1, 2), das den kleinsten äußeren Kabeldurchmesser (Cₘ) hat, damit ein Kontaktdruck von 0,1 MPa oder mehr ausgeübt wird,
- Bestimmen der Korrelation zwischen der angelegten Aufweitung und der Restverformung des Materials, die dem minimalen Wert für das negative Spiel entspricht,
- Bestimmen eines minimalen Aufweitwerts (Dm) für die angelegte Aufweitung, die, entsprechend dieser Korrelation, einer Momentanrestverformung der Hülse (10) entspricht, was den minimalen Wert für das negative Spiel ergibt, wenn ihre Freigabe erfolgt, nachdem sie auf diesem minimalen Aufweitwert während einer Lagerzeit gehalten wurde, die zu wenigstens 24 Monaten bei Raumtemperatur äquivalent ist,
- Prüfen, daß der minimale Wert (Dm) niedriger als ein zulässiger Aufweitwert (D_{Ram}) des vernetzten polymeren Materials ist und daß die Hülse (10) rißsicher ist, wenn der zulässige Aufweitwert wenigstens sechs Monate bei Raumtemperatur beibehalten wird,
- Wählen einer inneren Bohrung (Φ₀) im Ruhezustand der Hülse (10), die einem radialen Aufweitwert der elektrisch isolierenden Schicht (10b) entspricht, von der inneren Bohrung (Φ₀) bei Ruhe bis zu dem maximalen Durchmesser, der größer als der minimale Aufweitwert (Dm) und kleiner als der zulässige Aufweitwert (D_{Ram}) ist,
- Bereitstellen einer rohrförmigen Abstützung (11), die einen Außendurchmesser hat, der gleich dem maximalen Durchmesser ist, und elastisches Aufweiten der HÜlse (10) darauf,
- Einführen der rohrförmigen Abstützung (11), die die Hülse (10) auf sich aufgeweitet trägt, um ein Kabel (1, 2) in dem Kabeldurchmesserbereich und darauf erfolgendes Entfernen der rohrförmigen Abstützung (11) von der Hülse (10), wodurch die Hülse (10) zum elastischen Schrumpfen auf das Kabel (1, 2) veranlaßt wird.

## Revendications

1. Elément stockable de recouvrement pour des épissures de câbles électriques, destiné à être appliqué à des câbles (1, 2) comportant une couche (4) d'isolation électrique du câble, comprenant :
i. un élément tubulaire de support (11),
ii. un manchon élastique (10) constitué de composés polymères réticulés, comprenant une couche électriquement isolante (10b) comme partie de celui-ci, ledit manchon (10) étant emmanché sur ledit élément tubulaire de support (11) dans un état d'agrandissement élastique, de sorte que le manchon (10) après positionnement autour d'un câble (1, 2) et enlèvement dudit élément tubulaire de support (11), s'ajuste sur ledit câble (1, 2),
caractérisé en ce que :
iii. le module d'élasticité du manchon (10) est dans la plage de 5 à 0,5 MPa,
iv. la couche électriquement isolante (10b) du manchon (10) a une déformation résiduelle instantanée supérieure ou égale à 23 % lors de la libération à température ambiante après un agrandissement élastique jusqu'à un diamètre maximal prédéterminé avec une valeur d'agrandissement imposée supérieure ou égale à 170 %, maintenue pendant une durée de stockage équivalant à 24 mois au moins à température ambiante,
v. le manchon (10) a une interférence de 10 % au moins avec un diamètre minimal prédéterminé lors de la libération de l'élément de support (11) après ledit agrandissement élastique de la couche (10b) électriquement isolante, et
vi. l'épaisseur du manchon (10) est supérieure à 8 mm, l'épaisseur de la couche (10b) électriquement isolante étant de 6 mm au moins, de manière à provoquer une pression supérieure à 0,1 MPa sur la couche (4) d'isolation électrique du câble d'un câble (1, 2) ayant ledit diamètre minimal prédéterminé lors de la libération après ledit agrandissement élastique.

2. Elément stockable de recouvrement pour des épissures de câbles selon la revendication 1, caractérisé en ce que le manchon (10) est dans un état d'agrandissement situé dans la plage de 170 % à 320 % et a une déformation résiduelle instantanée correspondante comprise entre 23 % et 90%.

3. Elément stockable de recouvrement pour des épissures de câbles selon la revendication 2, caractérisé en ce que la couche (10b) électriquement isolante est dans un état d'agrandissement situé dans la plage de 170 % à 250 %.

4. Elément stockable de recouvrement pour des épissures de câbles selon la revendication 1, caractérisé en ce que ledit diamètre maximal prédéterminé est de 40 mm environ et ledit diamètre minimal prédéterminé est de 20 mm.

5. Elément stockable de recouvrement pour des épissures de câbles selon la revendication 1, caractérisé en ce que le manchon (10) a trois couches (10a, 10b, 10c) de composés de matériaux polymèrex réticuléx dans lesquelles la couche (10b) électriquement isolante est la couche intermédiaire et a une épaisseur égale à 80 % au moins de l'épaisseur totale du manchon (10).

6. Elément stockable de recouvrement pour des épissures de câbles selon la revendication 1, caractérisé en ce que l'agrandissement élastique de la couche (10b) électriquement isolante est inférieure à une valeur d'agrandissement admissible (D_{Ram}), inférieure à la valeur d'agrandissement limite (D_{R}) du composé de matériaux polymères réticulés de la couche (10b) électriquement isolante, et en ce que le manchon (10b) est à l'abri des déchirures lorsque ledit agrandissement est maintenu pendant 6 mois au moins à température ambiante.

7. Elément stockable de recouvrement pour des épissures de câbles selon la revendication 1, caractérisé en ce que le manchon (10) a au moins une couche (10a) radialement la plus à l'intérieur qui présente une valeur d'agrandissement limite supérieure à 250 % à la température normale d'exploitation du câble (1, 2) et supérieure à 350 % à température ambiante.

8. Elément stockable de recouvrement pour des épissures de câbles selon la revendication 1, caractérisé en ce que le manchon (10) à l'état agrandi a une épaisseur de paroi située dans la plage de 5 à 25 mm.

9. Procédé pour recouvrir, avec un élément stockable de recouvrement selon la revendication 1, des épissures de câbles électriques pour des câbles (1, 2) comportant une couche (4) électriquement isolante dans une plage prédéterminée de diamètre extérieur de câble s'étendant d'un diamètre extérieur de câble le plus petit (Cₘ) à un diamètre extérieur de câble le plus grand (C_{M}), caractérisé en ce qu'il comprend les étapes consistant à :
- choisir un diamètre d'agrandissement maximal, supérieur audit diamètre extérieur de câble le plus grand (C_{M}),
- choisir une couche (10b) électriquement isolante d'un manchon (10) de composés polymères réticulés ayant une déformation résiduelle instantanée supérieure ou égale à 23 % avec une valeur d'agrandissement imposée supérieure ou égale à 170 %,
- déterminer une valeur d'interférence minimale entre ledit manchon (10) ayant une épaisseur supérieure à 8 mm comprenant ladite couche (10b) électriquement isolante, qui a une épaisseur de 6 mm au moins, et la couche (4) électriquement isolante d'un câble (1, 2) ayant ledit diamètre extérieur de câble le plus petit (Cₘ), provoquant une pression de contact supérieure ou égale à 0,1 MPa,
- déterminer la corrélation entre l'agrandissement imposé et la déformation résiduelle dudit matériau, correspondant à ladite valeur minimale d'interférence,
- déterminer une valeur d'agrandissement minimale (Dₘ) dudit agrandissement imposé qui, conformément à ladite corrélation, correspond à une déformation résiduelle instantanée du manchon (10) procurant ladite valeur d'interférence minimale, lorsque libéré après avoir été maintenu à ladite valeur minimale d'agrandissement pendant une durée de stockage équivalant à 24 mois au moins à température ambiante,
- vérifier que ladite valeur minimale (Dₘ) soit inférieure à une valeur d'agrandissement admissible (D_{Ram}) dudit matériau polymère réticulé, et que le manchon (10) soit à l'abri des déchirures lorsque ladite valeur d'agrandissement admissible est maintenue pendant 6 mois au moins à température ambiante,
- choisir un diamètre intérieur au repos (φ₀) du manchon (10) correspondant à une valeur d'agrandissement radiale de ladite couche (10b) électriquement isolante à partir dudit diamètre intérieur au repos (φ₀) jusqu'audit diamètre maximal, supérieur à ladite valeur d'agrandissement minimale (Dₘ) et inférieur à ladite valeur d'agrandissement admissible (D_{Ram}),
- procurer un support tubulaire (11) ayant un diamètre extérieur égal audit diamètre maximal et à agrandir élastiquement le manchon (10) sur celui-ci,
- insérer ledit support tubulaire (11) supportant ledit manchon (10) expansé sur celui-ci autour d'un câble (1, 2) dans ladite plage de diamètre de câble et enlever successivement ledit support tubulaire (11) dudit manchon (10) amenant ainsi le manchon (10) à se rétracter élastiquement sur ledit câble (1, 2).
